# EUROPÄISCHE PATENTSCHRIFT

(11) **EP 3 510 272 B1**
(45) Veröffentlichungstag und Bekanntmachung des Hinweises auf die Patenterteilung: **04.05.2022**
(21) Anmeldenummer: 17754672.8
(22) Anmeldetag: 11.08.2017
(51) Int. Cl.: F02N 11/04, F02N 15/00, H02K 5/22, H02K 11/04, H02K 11/33

(54) **ABDICHTGEHÄUSE FÜR EINEN STARTER EINER VERBRENNUNGSKRAFTMASCHINE SOWIE BEFESTIGUNGSANORDNUNG EINER LEITUNG AN EINEM SOLCHEN STARTER**
SEALING HOUSING FOR A STARTER OF AN INTERNAL COMBUSTION ENGINE, AND SECURE ARRANGEMENT OF A LINE ON SUCH A STARTER
BOÎTIER D'ÉTANCHÉITÉ POUR UN DÉMARREUR D'UN MOTEUR À COMBUSTION INTERNE ET SYSTÈME DE FIXATION D'UN CONDUCTEUR À UN TEL DÉMARREUR

(30) Priorität: 06.09.2016 DE 102016216908
(43) Veröffentlichungstag der Anmeldung: 17.07.2019
(73) Patentinhaber: Bayerische Motoren Werke Aktiengesellschaft, 80809 München (DE)
(72) Erfinder: MAIER, Christian, 84137 Vilsbiburg (DE)
(86) Internationale Anmeldenummer: PCT/EP2017/070413
(87) Internationale Veröffentlichungsnummer: WO 2018/046232

(56) Entgegenhaltungen:
- EP-A1- 3 288 115
- DE-A1- 19 504 375
- DE-A1-102007 033 131
- JP-A- H07 222 392
- JP-A- 2011 146 230
- US-A1- 2012 090 910
- US-B1- 7 530 843

## Beschreibung

Die Erfindung betrifft ein Abdichtgehäuse für einen Starter zum Starten einer Verbrennungskraftmaschine für ein Kraftfahrzeug, sowie eine Befestigungsanordnung einer Leitung an einem Starter zum Starten einer Verbrennungskraftmaschine gemäß dem Oberbegriff von Patentanspruch 7.

Derartige Befestigungsanordnungen von Leitungen zum Übertragen von elektrischem Strom an jeweiligen Startern zum Starten jeweiliger Verbrennungskraftmaschine für Kraftfahrzeuge sind aus dem allgemeinen Stand der Technik und insbesondere aus dem Serienfahrzeugbau bereits hinlänglich bekannt. Bei einer solchen Befestigungsanordnung ist der jeweilige Starter über wenigstens ein erstes Kontaktelement des Starters und wenigstens ein zweites Kontaktelement der jeweiligen Leitung elektrisch mit der Leitung verbunden, sodass beispielsweise elektrischer Strom beziehungsweise elektrische Energie über die Leitung an den Starter übertragen beziehungsweise zu dem Starter geführt oder aber elektrischer Strom beziehungsweise elektrische Energie über die Leitung von dem Starter abgeführt werden kann. Die Leitung ist dabei eine von dem Starter unterschiedliche, zusätzlich zu dem Starter vorgesehene Leitung. Mit anderen Worten ist die Leitung eine von dem Starter unterschiedliche und zusätzlich zu dem Starter vorgesehene Komponente des Kraftfahrzeugs, wobei die Leitung zumindest teilweise, insbesondere zumindest überwiegend, außerhalb des Starters verläuft. Die Leitung ist somit kein elektrisches Bauelement des Starters.

Weiterhin ist der DE 10 2007 033 131 A1 ein Starter zum Starten einer Maschine als bekannt zu entnehmen. Der Starter umfasst einen Magnetschalter mit einem bewegbaren Kontakt und einem festen Kontakt, der mit einer Leistungsquelle verbunden ist. Der Starter umfasst einen Motor zum Starten der Maschinen durch Verwendung einer elektrischen Leistung, die von der Leistungsquelle zugeführt wird. Der Starter umfasst außerdem ein Verbindungsbauglied mit einem ersten Endabschnitt, der dem bewegbaren Kontakt innerhalb des Magnetschalters gegenüberliegt.

Außerdem offenbart die JP H07 222392 A eine elektrische Maschine mit Kabeln. Der US 7 530 843 B1 ist ein elektrischer Anschluss als bekannt zu entnehmen. Des Weiteren ist aus der JP 2011 146230 A eine Abdichtung eines Kabels bekannt. Des Weiteren offenbart die EP 3 288 115 A1 einen Verbinder.

Aufgabe der vorliegenden Erfindung ist es, ein Abdichtgehäuse sowie eine Befestigungsanordnung der eingangs genannten Art zu schaffen, sodass eine besonders vorteilhafte Übertragung von elektrischem Strom auf besonders einfache Weise realisiert werden kann.

Diese Aufgabe wird erfindungsgemäß durch ein Abdichtgehäuse mit den Merkmalen des Patentanspruchs 1 sowie durch eine Befestigungsanordnung mit den Merkmalen des Patentanspruchs 7 gelöst. Vorteilhafte Ausgestaltungen der Erfindung sind Gegenstand der abhängigen Ansprüche.

Ein erster Aspekt der Erfindung betrifft ein Abdichtgehäuse für einen mit wenigstens einer Leitung zum Übertragen von elektrischem Strom beziehungsweise elektrischer Energie verbindbaren Starter zum Starten einer Verbrennungskraftmaschine für ein Kraftfahrzeug. Der Starter wird üblicherweise auch als Anlasser bezeichnet und genutzt, um eine Verbrennungskraftmaschine auf hinlänglich bekannte Art und Weise zu starten. Die Leitung ist dabei eine von dem Starter unterschiedliche, zusätzlich zu dem Starter vorgesehene Leitung, welche zumindest teilweise, insbesondere zumindest überwiegend, außerhalb des Starters, insbesondere außerhalb eines Gehäuses des Starters, verläuft. Mit anderen Worten ist die Leitung eine von dem Starter unterschiedliche, zusätzlich zu dem Starter vorgesehene Komponente des Kraftfahrzeugs, sodass die Leitung kein Bauelement beziehungsweise elektrisches Bauelement des Starters ist. Mittels der elektrischen Leitung kann beispielsweise elektrischer Strom beziehungsweise elektrische Energie an den Starter übertragen beziehungsweise zu dem Starter geführt werden. Alternativ oder zusätzlich ist es denkbar, dass mittels der elektrischen Leitung beziehungsweise über die elektrische Leitung elektrische Energie beziehungsweise elektrischer Strom von dem Starter abgeführt werden kann.

Das Abdichtgehäuse umfasst wenigstens ein Gehäuseelement, welches einen Aufnahmeraum aufweist. In dem Aufnahmeraum sind wenigstens ein erstes Kontaktelement des Starters und wenigstens ein zweites Kontaktelement der Leitung aufnehmbar. Im Gegensatz zu der Leitung ist das erste elektrische Kontaktelement ein Bauelement des Starters. Das zweite Kontaktelement ist ein Teil beziehungsweise ein Bauelement der Leitung.

Das Gehäuseelement weist ferner eine in den Aufnahmeraum mündende erste Öffnung auf, über welche das erste Kontaktelement in den Aufnahmeraum einsteckbar ist. Ferner weist das Gehäuseelement eine in den Aufnahmeraum mündende zweite Öffnung auf, über welche das zweite Kontaktelement in den Aufnahmeraum einsteckbar ist, um dadurch das erste Kontaktelement mit dem zweiten Kontaktelement in dem Aufnahmeraum elektrisch zu verbinden. Die zweite Öffnung ist eine von der ersten Öffnung unterschiedliche, zusätzlich zur ersten Öffnung vorgesehene Öffnung, wobei die Öffnungen beispielsweise voneinander beabstandet sind. Hierzu ist beispielsweise wenigstens eine Wandung des Gehäuseelements zwischen den Öffnungen angeordnet, sodass die Öffnungen mittels der Wandung beispielsweise voneinander getrennt sind.

Das Abdichtgehäuse umfasst ferner eine Dichtungseinrichtung, mittels welcher unter wasserdichtem Abdichten der Öffnungen der Aufnahmeraum wasserdicht abzudichten beziehungsweise abgedichtet ist. Mit anderen Worten ist die Dichtungseinrichtung dazu ausgebildet, die Öffnungen und den Aufnahmeraum wasserdicht abzudichten. Dies bedeutet, dass mittels der Dichtungseinrichtung zumindest die Öffnungen abgedichtet werden können, um dadurch den Aufnahmeraum wasserdicht abzudichten. Durch diese wasserdichte Abdichtung beziehungsweise Abdichtbarkeit des Aufnahmeraums kann verhindert werden, dass Feuchtigkeit beziehungsweise Wasser in den Aufnahmeraum eindringt und somit zu den in dem Aufnahmeraum angeordneten Kontaktelementen vordringt, sodass eine übermäßige Beaufschlagung der Kontaktelemente mit Wasser beziehungsweise Feuchtigkeit auf einfache Weise vermieden werden kann.

Der Erfindung liegt dabei die Erkenntnis zugrunde, dass es bei herkömmlichen Verbrennungskraftmaschinen keine wasserdichte Anbindung der auch als Starterleitung bezeichneten Leitung an dem Starter vorgesehen ist. Üblicherweise ist eine Verschraubung vorgesehen, mittels welcher die Leitung mit dem Starter verbunden ist, um dadurch die Leitung mit dem Starter elektrisch und mechanisch zu verbinden. Üblicherweise ist kein Schutz der Verschraubung vorgesehen, sodass die Verschraubung üblicherweise nicht wasserdicht abgedichtet ist. Dabei wurde gefunden, dass die Verschraubung bei hoher Wasserlast durch Korrosion stark belastet werden kann, sodass die Verschraubung versagen kann. In der Folge kann sich die Leitung von dem Starter lösen. Dadurch ist üblicherweise ein Schutz der Verschraubung durch nachträgliches, manuelles Befetten erforderlich, wobei Fett manuell auf die Kontaktelemente aufgebracht wird, nachdem die Leitung mit dem Starter verbunden wurde. Der Prozess des Befettens ist nicht oder nur sehr aufwendig überwachbar und kann somit keinen hinreichenden Korrosionsschutz gewährleisten.

Diese Probleme und Nachteile können mittels des erfindungsgemäßen Abdichtgehäuses vermieden werden, da die Kontaktelemente mittels des Gehäuses effektiv und auf einfache Weise gegen eine übermäßige Beaufschlagung mit Feuchtigkeit beziehungsweise Wasser geschützt werden können.

Das erfindungsgemäße Abdichtgehäuse ermöglicht die Realisierung einer abdichtbaren beziehungsweise gedichteten Anschlussgeometrie zum Anschließen der Leitung an den Starter, insbesondere zum elektrischen Verbinden der Leitung mit dem Starter.

Das Abdichtgehäuse ist vorzugsweise als separat von dem Starter ausgebildete und zusätzlich zu dem Starter vorgesehene Komponente ausgebildet, wobei das Abdichtgehäuse beispielsweise reversibel lösbar mit dem Starter verbunden werden kann. Dabei ist es vorzugsweise vorgesehen, dass das Abdichtgehäuse in einem Lieferumfang der Leitung enthalten ist, sodass die Leitung und das Abdichtgehäuse beispielsweise einen Lieferumfang beziehungsweise eine Baueinheit bilden. Bei der Baueinheit ist das Abdichtgehäuse beispielsweise an der Leitung gehalten, sodass beispielsweise im Rahmen der Herstellung der Verbrennungskraftmaschine die Leitung an ein Montageband zum Herstellen der Verbrennungskraftmaschine in einem Zustand angeliefert wird, in welchem das Abdichtgehäuse an der Leitung gehalten ist. Dadurch kann die Leitung mittels des Abdichtgehäuses auf besonders einfache, zeit- und kostengünstige Weise mit dem Starter verbunden und insbesondere wasserdicht an den Starter angeschlossen werden. In der Folge kann eine zusätzliche manuelle Befettung der Kontaktelemente vermieden werden. Mittels des Abdichtgehäuses kann eine wasserdichte Verbindung zwischen dem Starter und der Leitung, welche beispielsweise mittels wenigstens einer Verschraubung an dem Starter gehalten ist, realisiert werden. Dadurch, dass im Vergleich zu herkömmlichen Verbrennungskraftmaschinen eine zusätzliche, manuell durchzuführende Befettung entfallen kann, entsteht kein Zusatzaufwand für die Montage beziehungsweise den Verbau der Leitung.

Zur Realisierung einer besonders einfachen Montage der Leitung ist ein separat von dem Gehäuseelement ausgebildeter, insbesondere reversibel lösbar, mit dem Gehäuseelement verbindbarer Deckel vorgesehen, mittels welchem die zweite Öffnung zumindest teilweise verschließbar ist. Unter der reversibel lösbaren Verbindung beziehungsweise Verbindbarkeit ist zu verstehen, dass der Deckel mit dem Gehäuseelement verbunden und von dem Gehäuseelement gelöst werden kann, ohne dass es zu Beschädigungen des Deckels oder des Gehäuseelements kommt.

Der Deckel weist eine Durchgangsöffnung für die Leitung auf. Somit kann sich die Leitung von außerhalb des Gehäuseelements durch die Durchgangsöffnung hindurch in das Gehäuseelement und somit in den Aufnahmeraum erstrecken, sodass das Abdichtgehäuse auf besonders einfache Weise an der Leitung montiert werden kann beziehungsweise umgekehrt.

Um dabei den Aufnahmeraum besonders effektiv abzudichten, weist die Dichtungseinrichtung wenigstens ein an dem Deckel gehaltenes Dichtungselement auf, mittels welchem die Leitung gegen den Deckel und der Deckel gegen das Gehäuseelement abzudichten. Dadurch kann verhindert werden, dass Wasser zwischen dem Deckel und der Leitung durch die Durchgangsöffnung hindurchströmt. Ferner kann vermieden werden, dass Wasser zwischen dem Deckel und dem Gehäuseelement hindurchströmt, sodass eine übermäßige Beaufschlagung der in dem Aufnahmeraum anordenbaren beziehungsweise angeordneten Kontaktelemente mit Wasser beziehungsweise Feuchtigkeit vermieden werden kann.

Der Deckel ist aus einem ersten Kunststoff gebildet, wobei das Dichtungselement aus einem gegenüber dem ersten Kunststoff weicheren, zweiten Kunststoff gebildet und an den Deckel angespritzt ist.

Erfindungsgemäß weist die Dichtungseinrichtung wenigstens ein zweites Dichtungselement zum Abdichten der ersten Öffnung auf.

Dadurch kann sicher vermieden werden, dass eine übermäßige Menge an Wasser beziehungsweise Feuchtigkeit in den Aufnahmeraum eintritt.

Um dabei den Aufnahmeraum besonders effektiv und auf besonders einfache Weise abzudichten, ist es bei einer weiteren Ausführungsform der Erfindung vorgesehen, dass das erste Dichtungselement aus einem dritten Kunststoff gebildet und an das Gehäuseelement des Abdichtgehäuses angespritzt ist. Hierzu wird beispielsweise das erste Dichtungselement im Rahmen eines Kunststoff-Spritzgießverfahrens an das Gehäuseelement angespritzt.

Dabei hat es sich als besonders vorteilhaft gezeigt, wenn das erste Dichtungselement aus dem dritten Kunststoff und das Gehäuseelement aus einem von dem dritten Kunststoff unterschiedlichen, vierten Kunststoff gebildet sind. Hierdurch kann das Abdichtgehäuse besonders einfache und somit zeit- und kostengünstig hergestellt werden. Das Gehäuseelement und das erste Dichtungselement bilden dabei ein Zwei-Komponenten-Spritzgussteil (2K-Spritzgussteil), wobei das Zwei-Komponenten-Spritzgussteil im Rahmen eines Spritzgießverfahrens aus den voneinander unterschiedlichen Kunststoffen hergestellt wird. Zur Realisierung einer besonders vorteilhaften Dichtwirkung ist es vorzugsweise vorgesehen, dass der dritte Kunststoff weicher als der vierte Kunststoff ist.

Um die Leitung auf besonders einfache Weise an dem Starter anzuschließen und dabei mit dem Starter elektrisch zu verbinden, ist es in weiterer Ausgestaltung der Erfindung vorgesehen, dass das Gehäuseelement eine in den Aufnahmeraum mündende dritte Öffnung aufweist, über welche wenigstens ein Befestigungselement zum Befestigen des ersten Kontaktelements an dem zweiten Kontaktelement und/oder zum Befestigen des Abdichtgehäuses an dem Starter in den Aufnahmeraum einsteckbar ist. Die dritte Öffnung ist beispielsweise eine von der ersten und zweiten Öffnung unterschiedliche, zusätzlich zur ersten und zweiten Öffnung vorgesehene Öffnung, welche beispielsweise von der ersten oder zweiten Öffnung beabstandet beziehungsweise getrennt ist. Hierzu ist beispielsweise eine jeweilige Wandung beziehungsweise ein jeweiliger Wandungsbereich zwischen der dritten Öffnung und der ersten und zweiten Öffnung angeordnet.

Dabei hat es sich als besonders vorteilhaft gezeigt, wenn ein separat von dem Gehäuseelement ausgebildeter und, insbesondere reversibel lösbar, mit dem Gehäuseelement verbindbarer zweiter Deckel vorgesehen ist, mittels welchem die dritte Öffnung zumindest teilweise verschließbar ist.

Ferner ist vorzugsweise ein drittes Dichtungselement vorgesehen, mittels welchem der zweite Deckel gegen das Gehäuseelement abgedichtet beziehungsweise abzudichten ist. Dabei sind beispielsweise die Ausführungen zum ersten Dichtungselement auf das dritte Dichtungselement übertragbar und umgekehrt. Somit ist es beispielsweise vorgesehen, dass das dritte Dichtungselement aus einem Kunststoff gebildet und an das Gehäuseelement des Abdichtgehäuses angespritzt ist. Insbesondere ist es denkbar, dass das dritte Dichtungselement aus einem von dem zweiten Kunststoff unterschiedlichen dritten Kunststoff gebildet ist. Dabei ist beispielsweise der dritte Kunststoff der erste Kunststoff, sodass das erste Dichtungselement und das dritte Dichtungselement aus demselben Kunststoff gebildet sein können. Dabei werden beispielsweise das erste Dichtungselement und das dritte Dichtungselement in einem gemeinsamen Kunststoff-Spritzgießverfahren aus demselben Kunststoff hergestellt, sodass das dritte Dichtungselement ebenfalls Bestandteil des Zwei-Komponenten-Spritzgussteils ist. Insbesondere ist es denkbar, dass das erste Dichtungselement und das dritte Dichtungselement einstückig miteinander ausgebildet sind.

Ein zweiter Aspekt der Erfindung betrifft eine Befestigungsanordnung einer Leitung zum Übertragen von elektrischem Strom beziehungsweise elektrischer Energie an einem Starter zum Starten einer Verbrennungskraftmaschine für ein Kraftfahrzeug. Bei der Befestigungsanordnung ist der Starter über wenigstens ein erstes Kontaktelement des Starters und wenigstens ein zweites Kontaktelement der von dem Starter unterschiedlichen, zusätzlich zum Starter vorgesehenen und zumindest teilweise, insbesondere zumindest überwiegend oder vollständig, außerhalb des Starters verlaufenden Leitung elektrisch mit der Leitung verbunden.

Um nun eine besonders vorteilhafte Übertragung von elektrischem Strom beziehungsweise elektrischer Energie zwischen der auch als Starterleitung bezeichneten Leitung und dem Starter zu realisieren, ist erfindungsgemäß ein Abdichtgehäuse mit wenigstens einem Gehäuseelement vorgesehen, welches einen Aufnahmeraum aufweist, in welchem die Kontaktelemente aufgenommen sind. Das Gehäuseelement weist ferner eine in den Aufnahmeraum mündende erste Öffnung auf, über welche das erste Kontaktelement in den Aufnahmeraum eingesteckt ist. Außerdem weist das Gehäuseelement eine in den Aufnahmeraum mündende zweite Öffnung auf, über welche das in dem Aufnahmeraum mit dem ersten Kontaktelement elektrisch verbundene zweite Kontaktelement in den Aufnahmeraum eingesteckt ist. Ferner umfasst das Abdichtgehäuse eine Dichtungseinrichtung, mittels welcher unter wasserdichtem Abdichten der Öffnungen der Aufnahmeraum wasserdicht abgedichtet ist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Des Weiteren ist ein separat von dem Gehäuseelement ausgebildeter, mit dem Gehäuseelement verbundener und eine Durchgangsöffnung für die Leitung aufweisender Deckel vorgesehen, mittels welchem die zweite Öffnung zumindest teilweise verschlossen ist.

Die Dichtungseinrichtung weist wenigstens ein an dem Deckel gehaltenes Dichtungselement auf, mittels welchem die Leitung gegen den Deckel und der Deckel gegen das Gehäuseelement abgedichtet ist. Der Deckel ist aus einem ersten Kunststoff und das Dichtungselement aus einem gegenüber dem ersten Kunststoff weicheren, zweiten Kunststoff gebildet, wobei das Dichtungselement an den Deckel angespritzt ist.

Weitere Einzelheiten der Erfindung ergeben sich aus der nachfolgenden Beschreibung eines bevorzugten Ausführungsbeispiels mit den zugehörigen Zeichnungen. Dabei zeigt:
- Fig. 1: ausschnittsweise eine schematische und teilweise geschnittene, erfindungsgemäße Befestigungsanordnung einer Leitung zum Übertragen von elektrischem Strom an einem Starter zum Starten einer Verbrennungskraftmaschine für ein Kraftfahrzeug;
- Fig. 2: eine schematische Explosionsansicht eines Abdichtgehäuses der Befestigungsanordnung;
- Fig. 3: ausschnittsweise eine schematische Perspektivansicht einer Anordnung des Abdichtgehäuses an dem Starter;
- Fig. 4: ausschnittsweise eine weitere schematische Perspektivansicht der Anordnung gemäß Fig. 3;
- Fig. 5: eine schematische Perspektivansicht der Anordnung gemäß Fig. 3 und 4;
- Fig. 6: ausschnittsweise eine schematische Perspektivansicht des Starters; und
- Fig. 7: ausschnittsweise eine schematische Seitenansicht des Starters.

In den Fig. sind gleiche oder funktionsgleiche Elemente mit gleichen Bezugszeichen versehen.

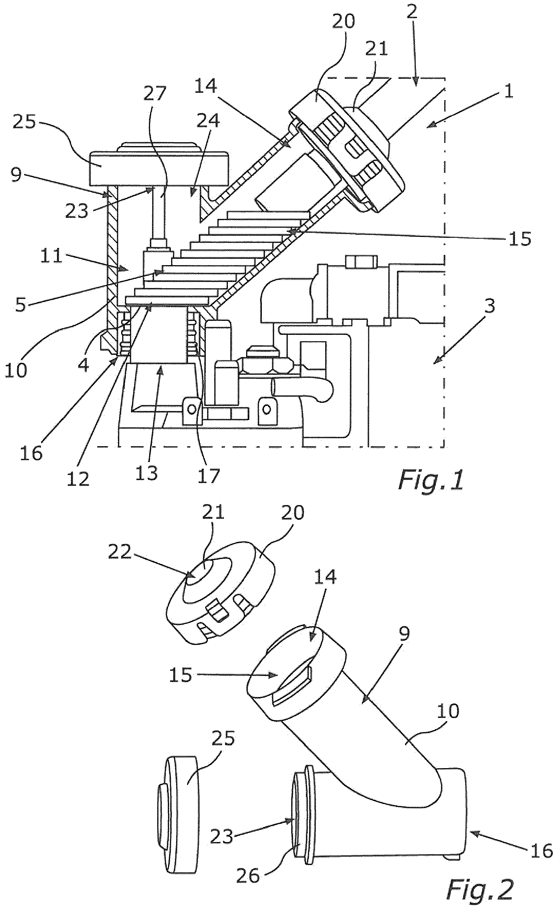

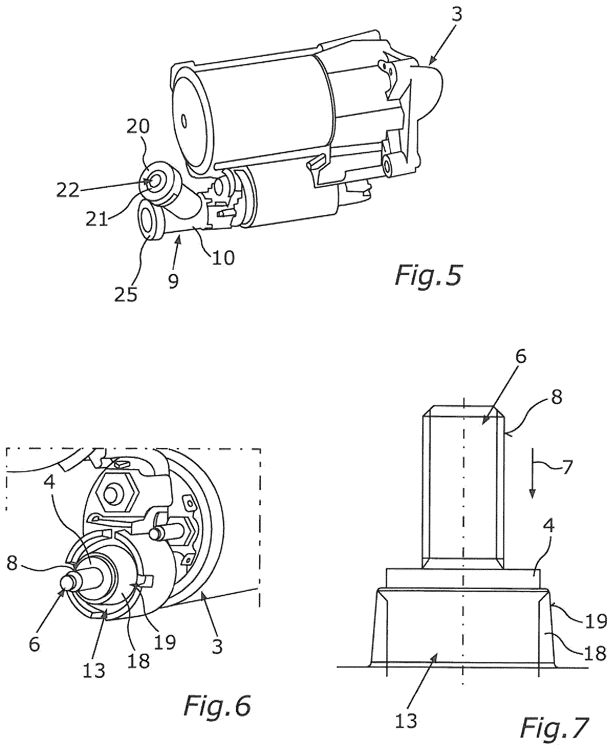

Fig. 1 zeigt ausschnittsweise in einer schematischen und teilweise geschnittenen Seitenansicht eine Befestigungsanordnung 1 einer Leitung 2 zum Übertragen von elektrischem Strom beziehungsweise elektrische Energie an einen in Fig. 1 ausschnittsweise und besonders gut aus Fig. 5 erkennbaren Starter 3 zum Starten einer Verbrennungskraftmaschine für ein Kraftfahrzeug. Das Kraftfahrzeug ist beispielsweise als Kraftwagen, insbesondere als Personenkraftwagen, ausgebildet und mittels der Verbrennungskraftmaschine antreibbar. Der Starter 3 wird auch als Anlasser bezeichnet, mittels welchem die zunächst deaktivierte Verbrennungskraftmaschine aktiviert, das heißt angelassen oder gestartet werden kann. Hierzu umfasst der Starter 3 eine beispielsweise als Elektromotor ausgebildete beziehungsweise als Elektromotor betreibbare elektrische Maschine, mittels welcher beispielsweise eine als Kurbelwelle ausgebildete Abtriebswelle der Verbrennungskraftmaschine auf eine Startdrehzahl beschleunigt werden kann. Ab Erreichen der Startdrehzahl wird die Abtriebswelle beispielsweise von Verbrennungsvorgängen angetrieben, welche in wenigstens einem beispielsweise als Zylinder ausgebildeten Brennraum der Verbrennungskraftmaschine ablaufen.

Bei der Befestigungsanordnung 1 ist der Starter 3 über die beziehungsweise mittels der Leitung 2 beispielsweise mit wenigstens einer weiteren, von dem Starter 3 und von der Leitung 2 unterschiedlichen, zusätzlich dazu vorgesehenen Komponente des Kraftfahrzeugs elektrisch verbunden, sodass beispielsweise über die beziehungsweise mittels der Leitung 2 elektrische Energie beziehungsweise elektrischer Strom von der weiteren Komponente zu dem Starter 3 und/oder von dem Starter 3 zu der weiteren Komponente übertragen werden kann. Bei der weiteren Komponente handelt es sich beispielsweise um einen Energiespeicher zum Speichern von elektrischer Energie, wobei der Energiespeicher beispielsweise als Batterie ausgebildet ist. Um die Verbrennungskraftmaschine zu starten, wird der Starter 3, insbesondere der Elektromotor, mit elektrischer Energie aus der Batterie versorgt, wobei die elektrische Energie zum Betreiben des Starters 3 über die Leitung 2 von der Batterie an den Starter 3 übertragen werden kann.

Alternativ oder zusätzlich ist es denkbar, dass die elektrische Maschine des Starters 3 als Generator betreibbar ist, mittels welchem beispielsweise mechanische Energie in elektrische Energie umgewandelt werden kann. Der Generator kann die elektrische Energie bereitstellen, welche dann beispielsweise von dem Generator über die Leitung 2 an die Batterie übertragen und in der Batterie gespeichert werden kann. Wie im Folgenden noch genauer erläutert wird, ist bei der Befestigungsanordnung 1 ein wasserdichter Anschluss der Leitung 2 an den Starter 3 vorgesehen, sodass die Leitung 2 wasserdicht mit dem Starter 3 elektrisch verbunden ist.

Hierzu umfasst der Starter 3 wenigstens ein besonders gut aus Fig. 7 erkennbares erstes Kontaktelement 4. Ferner umfasst die Leitung 2 wenigstens ein als Kabelschuh ausgebildetes, zweites Kontaktelement 5, welches elektrisch mit dem Kontaktelement 4 verbindbar beziehungsweise im Rahmen der Befestigungsanordnung 1 verbunden ist. Durch diese elektrische Verbindung der Kontaktelemente 4 und 5 ist die Leitung 2 elektrisch mit dem Starter 3 verbunden, sodass elektrische Energie über die Kontaktelemente 4 und 5 zwischen dem Starter 3 und der Leitung 2 übertragen werden können.

Das beispielsweise als Kabelschuh ausgebildete Kontaktelement 5 weist eine in den Fig. nicht erkennbare Durchgangsöffnung auf, durch welche beispielsweise ein aus Fig. 7 erkennbares Stiftelement 6 des Starters 3 hindurchgesteckt wird. In Längserstreckungsrichtung des Stiftelements 6 schließt sich an das Stiftelement 6 das Kontaktelement 4 an. Beispielsweise wird das Stiftelement 6 soweit durch die Durchgangsöffnung hindurchgesteckt, bis das Kontaktelement 5 in Kontakt mit dem Kontaktelement 4 kommt, wodurch die Kontaktelemente 4 und 5 elektrisch miteinander kontaktiert sind.

Dabei wird das Kontaktelement 5 in eine in Fig. 7 durch einen Pfeil 7 veranschaulichte Steckrichtung auf das Stiftelement 6 aufgesteckt, um das Stiftelement 6 durch die Durchgangsöffnung des Kabelschuhs hindurchzustecken. Die Steckrichtung weist dabei in Richtung des Kontaktelements 4 und verläuft parallel zur Längserstreckungsrichtung des Stiftelements 6.

Um das Kontaktelement 5 an dem Kontaktelement 4 zu befestigen beziehungsweise zu fixieren, sodass der elektrische Kontakt zwischen den Kontaktelementen 4 und 5 nicht unerwünschterweise aufgehoben wird, kommt wenigstens ein in den Fig. nicht dargestelltes Befestigungselement zum Einsatz, welches beispielsweise als Mutter ausgebildet ist. Die Mutter weist ein erstes Gewinde in Form eines Innengewindes auf. Das Stiftelement 6 weist ein mit dem Innengewinde korrespondierendes, zweites Gewinde in Form eines Außengewindes 8 auf. Das Stiftelement 6 schließt sich dabei entgegen der Steckrichtung an das Kontaktelement 4 an. Ist das Kontaktelement 5 auf das Stiftelement 6 aufgesteckt und befindet sich das Kontaktelement 5 in Kontakt mit dem Kontaktelement 4, so wird die Mutter über ihr Innengewinde und das Außengewinde 8 auf das Stiftelement 6 aufgeschraubt. Durch Drehen der Mutter relativ zu dem Stiftelement 6 wird mittels der Gewinde die Relativdrehung zwischen der Mutter und dem Stiftelement 6 in eine translatorische Relativbewegung zwischen der Mutter und dem Stiftelement 6 umgewandelt. Im Rahmen dieser translatorischen Relativbewegung wird die Mutter entlang der Steckrichtung auf das auf das Stiftelement 6 aufgesteckte Kontaktelement 5 und somit auf das Kontaktelement 4 zu bewegt. Dabei kommt die Mutter in zumindest mittelbare Stützanlage mit dem zwischen dem Kontaktelement 4 und der Mutter angeordneten Kontaktelement 5. Wird dann die Mutter festgezogen beziehungsweise angezogen, so wird das auf das Stiftelement 6 aufgesteckte Kontaktelement 5 gegen das Kontaktelement 4 gespannt, da das Kontaktelement 5 zwischen dem Kontaktelement 4 und der Mutter mittels dieser geklemmt wird. Hierdurch ist eine Verschraubung gebildet, mittels welcher das Kontaktelement 5 an dem Kontaktelement 4 mechanisch befestigt und in elektrischem Kontakt mit dem Kontaktelement 4 gehalten ist.

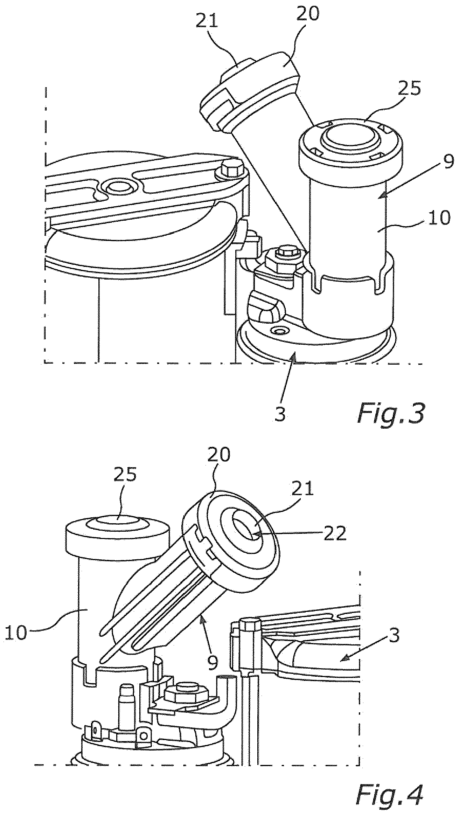

Um nun eine besonders vorteilhafte Übertragung von elektrischer Energie auf besonders einfache Weise zu realisieren, ist bei der Befestigungsanordnung 1 ein besonders gut aus Fig. 2 bis 5 erkennbares Abdichtgehäuse 9 vorgesehen. Wie im Folgenden noch genauer erläutert wird, kann die genannte Verschraubung mittels des Abdichtgehäuses 9 wasserdicht abgedichtet werden, um dadurch eine übermäßige Beaufschlagung der Verschraubung mit Wasser beziehungsweise Feuchtigkeit zu vermeiden.

Hierzu umfasst das Abdichtgehäuse 9 ein vorzugsweise einstückig ausgebildetes Gehäuseelement 10, welches einen besonders gut aus Fig. 1 erkennbaren Aufnahmeraum 11 aufweist. Bei der Befestigungsanordnung 1 sind die Kontaktelemente 4 und 5 in dem Aufnahmeraum 11 angeordnet und in dem Aufnahmeraum 11 elektrisch und mechanisch miteinander verbunden. Ferner ist aus Fig. 1 besonders gut erkennbar, dass die Leitung 2 eine von dem Starter 3 unterschiedliche, zusätzlich zum Starter 3 vorgesehen Leitung ist. Mit anderen Worten ist die Leitung 2 ein von dem Starter 3 unterschiedliches, zusätzlich zu dem Starter 3 vorgesehenes Bauelement des Kraftfahrzeugs, wobei die Leitung 2 zumindest teilweise, insbesondere zumindest überwiegend oder vollständig, außerhalb des Starters 3 verläuft. Die Leitung 2 ist somit kein elektrisches Bauteil des Starters 3.

Das Gehäuseelement 10 weist eine in den Aufnahmeraum 11 mündende erste Öffnung 12 auf, über welche das erste Kontaktelement 4 und das Stiftelement 6 und somit das Außengewinde 8 in den Aufnahmeraum 11 eingesteckt sind. Das Kontaktelement 4 und das Stiftelement 6 werden beispielsweise derart über die erste Öffnung 12 in den Aufnahmeraum 11 eingesteckt, dass das Gehäuseelement 10 auf das Stiftelement 6 und das Kontaktelement 4 aufgesteckt wird. Das Stiftelement 6 und somit das Außengewinde 8 und das Kontaktelement 4 sind Bestandteile eines besonders gut aus Fig. 6 und 7 erkennbaren Anschlusses 13 des Starters 3, wobei der Starter 3 über den Anschluss 13 beziehungsweise mittels des Anschlusses 13 sowohl mechanisch als auch elektrisch mit der Leitung 2 verbunden werden kann. Dabei wird das Gehäuseelement 10 auf den Anschluss 13 aufgesteckt, sodass das Stiftelement 6 und das Kontaktelement 4 in den Aufnahmeraum 11 eingesteckt werden.

Das Gehäuseelement 10 weist ferner eine in den Aufnahmeraum 11 mündende zweite Öffnung 14 auf, über welche das zweite Kontaktelement 5 in den Aufnahmeraum 11 einsteckbar beziehungsweise eingesteckt ist, um dadurch die Kontaktelementen 4 und 5 in dem Aufnahmeraum 11 elektrisch miteinander zu verbinden. Aus Fig. 1 ist erkennbar, dass sich an die zweite Öffnung 14 ein erster Kanal 15 des Gehäuseelements 10 anschließt, sodass die Leitung 2, insbesondere das Kontaktelement 5, über die Öffnung 14 in den Kanal 15 eingesteckt und entlang des Kanals 15 in den Aufnahmeraum 11 eingesteckt wird.

Des Weiteren umfasst das Abdichtgehäuse 9 eine im Ganzen mit 16 bezeichnete Dichtungseinrichtung, mittels welcher unter wasserdichtem Abdichten der Öffnungen 12 und 14 der Aufnahmeraum 11 wasserdicht abzudichten beziehungsweise abgedichtet ist. Mit anderen Worten ist die Dichtungseinrichtung 16 dazu ausgebildet, die Öffnungen 12 und 14 sowie den Aufnahmeraum 11 wasserdicht abzudichten, sodass die zuvor genannte, in dem Aufnahmeraum 11 ausgebildete beziehungsweise angeordnete Verschraubung vor einer übermäßigen Beaufschlagung mit Wasser geschützt ist. Dadurch ist ein wasserdichter Anschluss der Leitung 2 an den Starter 3 geschaffen.

Die Dichtungseinrichtung 16 umfasst ein in Fig. 1 erkennbares erstes Dichtungselement 17, mittels welchem die erste Öffnung 12 abzudichten beziehungsweise abgedichtet ist. Ferner weist der Anschluss 13 einen als Dichtkonus fungierenden, mit dem Dichtungselement 17 korrespondierenden Konus 18 auf, welcher sich in Längserstreckungsrichtung des Stiftelements 6, insbesondere in die Steckrichtung, an das Kontaktelement 4 anschließt.

Das Abdichtgehäuse 9, insbesondere das Gehäuseelement 10, kann insbesondere reversibel lösbar auf den Anschluss 13 aufgesteckt und mit dem Anschluss 13 verbunden werden. Unter dieser reversibel lösbaren Verbindung beziehungsweise Verbindbarkeit ist zu verstehen, dass das Abdichtgehäuse 9 beziehungsweise das Gehäuseelement 10 mit dem Anschluss 13 verbunden beziehungsweise an dem Anschluss 13 befestigt und von dem Anschluss 13 gelöst werden kann, ohne dass es zu Beschädigungen des Anschlusses 13 oder des Abdichtgehäuses 9 kommt. Durch das Aufstecken des Gehäuseelements 10 auf den Anschluss 13 kommt das erste Dichtungselement 17 in Zusammenwirken, insbesondere in Stützanlage, mit dem Konus 18, sodass das erste Dichtungselement 17 an einer außenumfangsseitigen Mantelfläche 19 des Konus 18 abgestützt ist. Hierdurch ist das Gehäuseelement 10 mittels des Dichtungselements 17 gegen den Anschluss 13 beziehungsweise gegen den Konus 18 abgedichtet, wodurch die erste Öffnung 12 wasserdicht abgedichtet ist.

Vorzugsweise ist das erste Dichtungselement 17 aus einem Kunststoff gebildet und an das Gehäuseelement 10 angespritzt. Dabei hat es sich als besonders vorteilhaft gezeigt, wenn das erste Dichtungselement 17 aus einem ersten Kunststoff und das Gehäuseelement 10 aus einem von dem ersten Kunststoff unterschiedlichen, zweiten Kunststoff gebildet ist. Um dabei eine besonders vorteilhafte Dichtungswirkung zu realisieren, ist der erste Kunststoff vorzugsweise weicher als der zweite Kunststoff. Hierdurch kann sich das Dichtungselement 17 besonders gut an den Konus 18, insbesondere an die außenumfangsseitige Mantelfläche 19, anlegen beziehungsweise anschmiegen, sodass die Öffnung 12 besonders gut abgedichtet ist.

Vorzugsweise ist das Gehäuseelement 10 aus einem faserverstärkten Kunststoff, insbesondere aus einem glasfaserverstärkten Kunststoff wie beispielsweise PA6 GF15, gebildet. Somit handelt es sich beispielsweise bei dem zweiten Kunststoff um glasfaserverstärktes Polyamid. Alternativ oder zusätzlich ist es vorgesehen, dass der erste Kunststoff TPE (thermoplastisches Elastomer) ist. Das Gehäuseelement 10 und das an das Gehäuseelement 10 angespritzte Dichtungselement 17 bilden somit beispielsweise ein Zwei-Komponenten-Kunststoffteil (2K-Teil), insbesondere ein Zwei-Komponente-Spritzgussteil.

Das Abdichtgehäuse 9 umfasst einen separat von dem Gehäuseelement 10 ausgebildeten und beispielsweise aus einem Kunststoff hergestellten, ersten Deckel 20, welcher vorzugsweise reversibel lösbar mit dem Gehäuseelement 10 verbindbar ist. Mittels des Deckels 20 ist die zweite Öffnung 14 zumindest teilweise, insbesondere zumindest überwiegend, verschließbar beziehungsweise bei der Befestigungsanordnung 1 verschlossen. Der Deckel 20 ist dabei vorzugsweise aus einem faserverstärkten Kunststoff, insbesondere aus einem glasfaserverstärkten Kunststoff wie beispielsweise PA6 GF15, hergestellt.

Die Dichtungseinrichtung 16 umfasst dabei ein an dem Deckel 20 gehaltenes zweites Dichtungselement 21 zum wasserdichten Abdichten der zweiten Öffnung 14. Dabei ist es vorzugsweise vorgesehen, dass das zweite Dichtungselement 21 aus einem Kunststoff gebildet und an dem Deckel 20 angespritzt ist. Beispielsweise ist der Deckel 20 aus einem dritten Kunststoff und das Dichtungselement 21 aus einem von dem dritten Kunststoff unterschiedlichen, vierten Kunststoff gebildet, wobei vorzugsweise der vierte Kunststoff weicher als der dritte Kunststoff ist. Dabei kann der dritte Kunststoff dem zweiten Kunststoff und der vierte Kunststoff dem ersten Kunststoff entsprechen. Somit handelt es sich beispielsweise bei dem vierten Kunststoff um TPE. Somit bilden beispielsweise der Deckel 20 und das zweite Dichtungselement 21 ein Zwei-Komponenten-Kunststoffteil (2K-Kunststoffteil).

Das Dichtungselement 21 kann sich besonders vorteilhaft an den Deckel 20 und/oder an das Gehäuseelement 10 anschmiegen, sodass der Deckel 20 besonders vorteilhaft mittels des Dichtungselements 21 gegen das Gehäuseelement 10 abzudichten beziehungsweise abgedichtet ist.

Besonders gut aus Fig. 2 ist erkennbar, dass der Deckel 20 und das Dichtungselement 21 jeweilige, in gegenseitiger Überlappung angeordnete Durchgangsöffnungen 22 für die Leitung 2 aufweisen. In fertig hergestelltem Zustand der Befestigungsanordnung 1 durchdringt die Leitung 2 die Durchgangsöffnungen 22, sodass sich die Leitung 2 von außerhalb des Gehäuseelements 10 durch die Durchgangsöffnungen 22 hindurch in das Gehäuseelement 10 und dabei durch den Kanal 15 hindurch in den Aufnahmeraum 11 erstreckt. Dabei ist die Leitung 2 mittels des Dichtungselements 21 gegen den Deckel 20 abgedichtet, sodass kein Wasser zwischen der Leitung 2 und dem Dichtungselement 21 oder zwischen dem Dichtungselement 21 und dem Deckel 20 hindurch in das Gehäuseelement 10 eindringen kann.

Außerdem weist das Gehäuseelement 10 eine besonders gut aus Fig. 1 erkennbare, in den Aufnahmeraum 11 mündende dritte Öffnung 23 auf, an welche sich beispielsweise ein zweiter Kanal 24 anschließt. Außerdem umfasst das Abdichtgehäuse 9 einen zweiten Deckel 25, welcher beispielsweise aus einem Kunststoff, insbesondere aus einem faserverstärkten Kunststoff, gebildet ist. Beispielsweise ist der Deckel 25 aus einem glasfaserverstärkten Kunststoff wie beispielsweise PA6 GF15 gebildet. Der zweite Deckel 25 ist reversibel lösbar mit dem Gehäuseelement 10 verbindbar beziehungsweise verbunden, sodass die dritte Öffnung 23 zumindest teilweise, insbesondere zumindest überwiegend oder vollständig, mittels des zweiten Deckels 25 verschließbar beziehungsweise verschlossen ist. Insbesondere weist das Abdichtgehäuse 9 einen Bajonettverschluss auf, mittels welchem der Deckel 25 reversibel lösbar an dem Gehäuseelement 10 befestigbar beziehungsweise befestigt ist.

Die Dichtungseinrichtung 16 umfasst dabei ein besonders gut aus Fig. 2 erkennbares drittes Dichtungselement 26, mittels welchem der Deckel 25 gegen das Gehäuseelement 10 abdichtbar beziehungsweise abgedichtet ist. Dadurch ist die dritte Öffnung 23 wasserdicht abdichtbar beziehungsweise abgedichtet. Dabei ist das dritte Dichtungselement 26 an dem Gehäuseelement 10 gehalten.

Das dritte Dichtungselement 26 ist beispielsweise aus einem von dem zweiten Kunststoff unterschiedlichen, fünften Kunststoff gebildet, wobei der fünfte Kunststoff dem ersten Kunststoff entsprechen kann. Somit ist das Dichtungselement 26 beispielsweise aus TPE gebildet. Vorzugsweise ist das Dichtungselement 26 an das Gehäuseelement 10 angespritzt, wobei vorzugsweise vorgesehen sein kann, dass die Dichtungselemente 17 und 26 einstückig miteinander ausgebildet sind. Somit werden die Dichtungselemente 17 und 26 beispielsweise in einem gemeinsamen Spritzgießverfahren an das Gehäuseelement 10 angespritzt, wobei die Dichtungselemente 17 und 26 aus dem gleichen beziehungsweise aus demselben Kunststoff hergestellt werden. Dabei ist aus Fig. 1 eine aus dem ersten beziehungsweise fünften Kunststoff gebildete Kunststoffspur 27 erkennbar, welche einstückig mit den Dichtungselementen 17 und 26 ausgebildet ist. Die Kunststoffspur 27 ist aus fertigungstechnischen Gründen vorgesehen, um die Dichtungselemente 17 und 26 in einem gemeinsamen Spritzgießverfahren an das Gehäuseelement 10 anzuspritzen. Somit ist beispielsweise das Dichtungselement 26 Bestandteil des das Gehäuseelement 10 und das Dichtungselement 17 umfassenden Zwei-Komponenten-Kunststoffteils. Da das Zwei-Komponenten-Kunststoffteil durch Spritzgießen hergestellt wird, ist das Zwei-Komponenten-Kunststoffteil als Zwei-Komponenten-Spritzgussteil ausgebildet.

Besonders gut aus Fig. 1 ist erkennbar, dass der Aufnahmeraum 11 und somit die in dem Aufnahmeraum 11 angeordnete beziehungsweise anordenbare Mutter über die dritte Öffnung 23 insbesondere dann zugänglich sind, wenn das Gehäuseelement 10 bereits auf den Anschluss 13 und die Leitung 2 beziehungsweise das Kontaktelement 5 auf das Stiftelement 6 aufgesteckt ist. Über die Öffnung 23 kann die Mutter auf das Stiftelement 6 aufgeschraubt und insbesondere mit dem Stiftelement 6 verschraubt und angezogen beziehungsweise festgezogen werden, um dadurch das Kontaktelement 5 an dem Kontaktelement 4 auf die beschriebene Weise zu fixieren. Nach erfolgter Fixierung des Kontaktelements 5 an dem Kontaktelement 4 wird die Öffnung 23 verschlossen und abgedichtet, indem der Deckel 25 an dem Gehäuseelement 10 befestigt wird.

Da mittels der Dichtungseinrichtung 16 die Öffnungen 12, 14 und 23 abgedichtet sind, ist der Aufnahmeraum 11 wasserdicht, sodass ein wasserdichter Anschluss der Leitung 2 am Starter 3 dargestellt ist. Der Anschluss 13 wird auch als "Klemme 30" (KL.30) bezeichnet, wobei die "Klemme 30" mittels des Abdichtgehäuses 9, insbesondere mittels des aus einem Kunststoff gebildeten und somit als Kunststoffgehäuse ausgebildeten Gehäuseelements 10, geschützt ist. Insbesondere kann der Anschluss 13 mittels des Abdichtgehäuses 9 von einer übermäßigen Beaufschlagung mit Wasser geschützt werden, sodass eine übermäßige Korrosion des Anschlusses 13 beziehungsweise der Kontaktelemente 4 und 5 vermieden werden kann.

Durch das beschriebene Anziehen beziehungsweise Festschrauben der Mutter auf dem Stiftelement 6 wird nicht nur das Kontaktelement 5 an dem Kontaktelement 4 fixiert, sondern mittels der Mutter, das heißt durch Anziehen beziehungsweise Festschrauben der Mutter auf dem Stiftelement 6, wird auch das Abdichtgehäuse 9 am Starter 3 befestigt. Die Mutter wird nämlich über das Kontaktelement 5 an dem Kontaktelement 4 und somit an dem Starter 3 abgestützt und somit gegen den Starter 3 gespannt, wodurch das Gehäuseelement 10 beziehungsweise das Abdichtgehäuse 9 insgesamt über das Kontaktelement 5 mittels der Mutter gegen den Starter 3 beziehungsweise gegen das Kontaktelement 4 gespannt wird. Dadurch wird das Abdichtgehäuse 9 beziehungsweise das Gehäuseelement 10 sicher am Starter 3 fixiert.

Um das Abdichtgehäuse 9 beziehungsweise die Leitung 2 auf besonders einfache Weise von dem Starter 3 zu lösen, wird beispielsweise zunächst der Deckel 25 zerstörungsfrei von dem Gehäuseelement 10 abgenommen. Über die dann freigegebene Öffnung 23 kann die Mutter von dem Stiftelement 6 gelöst werden, sodass dann die Leitung 2 von dem Stiftelement 6 beziehungsweise das Abdichtgehäuse 9 von dem Anschluss 13 und somit von dem Starter 3 insgesamt gelöst beziehungsweise abgezogen werden kann.

### Bezugszeichenliste

- 1: Befestigungsanordnung
- 2: Leitung
- 3: Starter
- 4: erstes Kontaktelement
- 5: zweites Kontaktelement
- 6: Stiftelement
- 7: Pfeil
- 8: Außengewinde
- 9: Abdichtgehäuse
- 10: Gehäuseelement
- 11: Aufnahmeraum
- 12: erste Öffnung
- 13: Anschluss
- 14: zweite Öffnung
- 15: erster Kanal
- 16: Dichtungseinrichtung
- 17: erstes Dichtungselement
- 18: Konus
- 19: außenumfangsseitige Mantelfläche
- 20: erster Deckel
- 21: zweites Dichtungselement
- 22: Durchgangsöffnungen
- 23: dritte Öffnung
- 24: zweiter Kanal
- 25: zweiter Deckel
- 26: drittes Dichtungselement
- 27: Kunststoffspur

## Patentansprüche

1. Abdichtgehäuse (9) für einen mit wenigstens einer Leitung (2) zum Übertragen von elektrischem Strom verbindbaren Starter (3) zum Starten einer Verbrennungskraftmaschine für ein Kraftfahrzeug, mit wenigstens einem Gehäuseelement (10), welches einen Aufnahmeraum (11), in welchem wenigstens ein erstes Kontaktelement (4) des Starters (3) und wenigstens ein zweites Kontaktelement (5) der von dem Starter (3) unterschiedlichen, zusätzlich zu dem Starter (3) vorgesehenen und zumindest teilweise außerhalb des Starters (3) verlaufenden Leitung (2) aufnehmbar sind, eine in den Aufnahmeraum (11) mündende erste Öffnung (12), über welche das erste Kontaktelement (4) in den Aufnahmeraum (11) einsteckbar ist, und eine in den Aufnahmeraum (11) mündende zweite Öffnung (14) aufweist, über welche zum elektrischen Verbinden des ersten Kontaktelements (4) mit dem zweiten Kontaktelement (5) das zweite Kontaktelement (5) in den Aufnahmeraum (11) einsteckbar ist, und mit einer Dichtungseinrichtung (16), mittels welcher unter wasserdichtem Abdichten der Öffnungen (12, 14) der Aufnahmeraum (11) wasserdicht abzudichten ist, wobei ein separat von dem Gehäuseelement (10) ausgebildeter, mit dem Gehäuseelement (10) verbindbarer und eine Durchgangsöffnung (22) für die Leitung (2) aufweisender Deckel (20) vorgesehen ist, mittels welchem die zweite Öffnung (14) zumindest teilweise verschließbar ist,
**dadurch gekennzeichnet, dass**
die Dichtungseinrichtung (16) wenigstens ein an dem Deckel (20) gehaltenes zweites Dichtungselement (21) aufweist, mittels welchem die Leitung (2) gegen den Deckel (20) und der Deckel (20) gegen das Gehäuseelement (10) abzudichten ist, wobei der Deckel (20) aus einem ersten Kunststoff und das zweite Dichtungselement (21) aus einem gegenüber dem ersten Kunststoff weicheren, zweiten Kunststoff gebildet sind und wobei das zweite Dichtungselement (21) an den Deckel (20) angespritzt ist

2. Abdichtgehäuse (9) nach Anspruch 1,
**dadurch gekennzeichnet, dass**
die Dichtungseinrichtung (16) wenigstens ein erstes Dichtungselement (17) zum Abdichten der ersten Öffnung (12) aufweist.

3. Abdichtgehäuse (9) nach Anspruch 2,
**dadurch gekennzeichnet, dass**
das erste Dichtungselement (17) aus einem Kunststoff gebildet und an das Gehäuseelement (10) des Abdichtgehäuses (9) angespritzt ist.

4. Abdichtgehäuse (9) nach Anspruch 3,
**dadurch gekennzeichnet, dass**
das erste Dichtungselement (17) aus einem dritten Kunststoff und das Gehäuseelement (10) aus einem von dem dritten Kunststoff unterschiedlichen, vierten Kunststoff gebildet ist.

5. Abdichtgehäuse (9) einem der vorhergehenden Ansprüche,
**dadurch gekennzeichnet, dass**
der Deckel (20) reversibel lösbar mit dem Gehäuseelement (10) verbindbar ist.

6. Abdichtgehäuse (9) nach einem der vorhergehenden Ansprüche,
**dadurch gekennzeichnet, dass**
das Gehäuseelement (10) eine in den Aufnahmeraum (11) mündende dritte Öffnung (23) aufweist, über welche wenigstens ein Befestigungselement zum Befestigen des ersten Kontaktelements (4) am zweiten Kontaktelement (5) und/oder zum Befestigen des Abdichtgehäuses (9) an dem Starter (3) in den Aufnahmeraum (11) einsteckbar ist.

7. Befestigungsanordnung (1) einer Leitung (2) zum Übertragen von elektrischem Strom an einem Starter (3) zum Starten einer Verbrennungskraftmaschine für ein Kraftfahrzeug,
mit einem Abdichtgehäuse (9) gemäß Anspruch 1,
wobei die Leitung (2) in das Abdichtgehäuse eingesteckt ist und wobei der Starter (3) über wenigstens das erste Kontaktelement (4) des Starters (3) und wenigstens das zweite Kontaktelement (5) mit der Leitung (2) verbunden ist.

## Claims

1. Sealing housing (9) for a starter (3), which can be connected to at least one cable (2) for the transmission of electrical current, for starting an internal combustion engine for a motor vehicle, with at least one housing element (10) which has a receiving space (11), in which at least one first contact element (4) of the starter (3) and at least one second contact element (5) of the cable (2) which is different from the starter (3), is provided in addition to the starter (3), and runs at least partially outside the starter (3) can be received; a first opening (12) which opens into the receiving space (11) and via which the first contact element (4) can be plugged into the receiving space (11); and a second opening (14) which opens into the receiving space (11) and via which the second contact element (5) can be plugged into the receiving space (11) for the electrical connection of the first contact element (4) to the second contact element (5), and with a seal device (16), by means of which the receiving space (11) is to be sealed in a water-tight manner with water-tight sealing of the openings (12, 14), a cover (20) which is configured separately from the housing element (10), can be connected to the housing element (10) and has a passage opening (22) for the cable (2) being provided, by means of which cover (20) the second opening (14) can be closed at least partially, **characterized in that** the seal device (16) has at least one second seal element (21) which is held on the cover (20) and by means of which the cable (2) is to be sealed with respect to the cover (20) and the cover (20) is to be sealed with respect to the housing element (10), the cover (20) being formed from a first plastic, and the second seal element (21) being formed from a second plastic which is softer than the first plastic, and the second seal element (21) being moulded onto the cover (20).

2. Sealing housing (9) according to Claim 1, **characterized in that** the seal device (16) has at least one first seal element (17) for sealing the first opening (12) .

3. Sealing housing (9) according to Claim 2, **characterized in that** the first seal element (17) is formed from a plastic and is moulded onto the housing element (10) of the sealing housing (9).

4. Sealing housing (9) according to Claim 3, **characterized in that** the first seal element (17) is formed from a third plastic, and the housing element (10) is formed from a fourth plastic which is different from the third plastic.

5. Sealing housing (9) according to one of the preceding claims, **characterized in that** the cover (20) can be connected in a reversibly releasable manner to the housing element (10).

6. Sealing housing (9) according to one of the preceding claims, **characterized in that** the housing element (10) has a third opening (23) which opens into the receiving space (11) and via which at least one fastening element for fastening the first contact element (4) to the second contact element (5) and/or for fastening the sealing housing (9) to the starter (3) can be plugged into the receiving space (11).

7. Fastening arrangement (1) of a cable (2) for the transmission of electrical current to a starter (3) for starting an internal combustion engine for a motor vehicle, with a sealing housing (9) according to Claim 1, the cable (2) being plugged into the sealing housing, and the starter (3) being connected to the cable (2) via at least the first contact element (4) of the starter (3) and at least the second contact element (5).

## Revendications

1. Boîtier d'étanchéité (9) pour un démarreur (3) pouvant être relié à au moins une conduite (2) pour la transmission de courant électrique pour le démarrage d'un moteur à combustion interne pour un véhicule automobile, comprenant au moins un élément de boîtier (10), qui présente un espace de réception (11), dans lequel peuvent être reçus au moins un premier élément de contact (4) du démarreur (3) et au moins un deuxième élément de contact (5) de la conduite (2) différente du démarreur (3), prévue en plus du démarreur (3) et s'étendant au moins partiellement à l'extérieur du démarreur (3), une première ouverture (12) débouchant dans l'espace de réception (11), par l'intermédiaire de laquelle le premier élément de contact (4) peut être inséré dans l'espace de réception (11), et une deuxième ouverture (14) débouchant dans l'espace de réception (11), par l'intermédiaire de laquelle le deuxième élément de contact (5) peut être inséré dans l'espace de réception (11) pour la connexion électrique du premier élément de contact (4) avec le deuxième élément de contact (5), et comprenant un appareil d'étanchéité (16) au moyen duquel, en rendant étanches à l'eau les ouvertures (12, 14), l'espace de réception (11) peut être rendu étanche à l'eau, un couvercle (20), configuré séparément de l'élément de boîtier (10), pouvant être relié à l'élément de boîtier (10) et présentant une ouverture de passage (22) pour la conduite (2), étant prévu, au moyen duquel la deuxième ouverture (14) peut être fermée au moins partiellement, **caractérisé en ce que**
l'appareil d'étanchéité (16) présente au moins un deuxième élément d'étanchéité (21) maintenu sur le couvercle (20), au moyen duquel la conduite (2) doit être rendue étanche par rapport au couvercle (20) et le couvercle (20) par rapport à l'élément de boîtier (10), le couvercle (20) étant formé en une première matière plastique et le deuxième élément d'étanchéité (21) étant formé en une deuxième matière plastique plus souple par rapport à la première matière plastique, et le deuxième élément d'étanchéité (21) étant moulé par injection sur le couvercle (20).

2. Boîtier d'étanchéité (9) selon la revendication 1, **caractérisé en ce que** l'appareil d'étanchéité (16) présente au moins un premier élément d'étanchéité (17) pour rendre étanche la première ouverture (12).

3. Boîtier d'étanchéité (9) selon la revendication 2, **caractérisé en ce que** le premier élément d'étanchéité (17) est formé en une matière plastique et est moulé par injection sur l'élément de boîtier (10) du boîtier d'étanchéité (9).

4. Boîtier d'étanchéité (9) selon la revendication 3, **caractérisé en ce que** le premier élément d'étanchéité (17) est formé en une troisième matière plastique et l'élément de boîtier (10) est formé en une quatrième matière plastique différente de la troisième matière plastique.

5. Boîtier d'étanchéité (9) selon l'une quelconque des revendications précédentes, **caractérisé en ce que** le couvercle (20) peut être relié réversiblement de manière amovible à l'élément de boîtier (10).

6. Boîtier d'étanchéité (9) selon l'une quelconque des revendications précédentes, **caractérisé en ce que** l'élément de boîtier (10) présente une troisième ouverture (23) débouchant dans l'espace de réception (11), par l'intermédiaire de laquelle au moins un élément de fixation peut être inséré dans l'espace de réception (11) pour fixer le premier élément de contact (4) au deuxième élément de contact (5) et/ou pour fixer le boîtier d'étanchéité (9) au démarreur (3).

7. Agencement de fixation (1) d'une conduite (2) pour la transmission de courant électrique à un démarreur (3) pour le démarrage d'un moteur à combustion interne pour un véhicule automobile, comprenant un boîtier d'étanchéité (9) selon la revendication 1, la conduite (2) étant insérée dans le boîtier d'étanchéité et le démarreur (3) étant relié à la conduite (2) par l'intermédiaire d'au moins le premier élément de contact (4) du démarreur (3) et d'au moins le deuxième élément de contact (5).
